# NEUE EUROPÄISCHE PATENTSCHRIFT

(11) **EP 1 731 010 B2**
(45) Veröffentlichungstag und Bekanntmachung des Hinweises auf die Entscheidung über den Einspruch: **27.12.2017**
(45) Hinweis auf die Patenterteilung: 11.08.2010
(21) Anmeldenummer: 06011824.7
(22) Anmeldetag: 08.06.2006
(51) Int. Cl.: A01B 45/02, A01D 34/04

(54) **Fahrzeug**
Vehicle
Véhicule

(30) Priorität: 09.06.2005 DE 102005026761
(43) Veröffentlichungstag der Anmeldung: 13.12.2006
(73) Patentinhaber: Brielmaier, Martin, 88048 Friedrichshafen (DE)
(72) Erfinder: Brielmaier, Martin, 88048 Friedrichshafen (DE)
(74) Vertreter: Patentanwälte und Rechtsanwalt Weiß, Arat & Partner mbB

(56) Entgegenhaltungen:
- AT-B- 42 352
- DE-A1- 2 536 611
- DE-A1- 2 650 330
- DE-A1- 3 040 590
- DE-A1- 3 744 046
- DE-C1- 3 843 890
- DE-T2- 60 108 110
- GB-A- 2 334 875
- US-A- 1 538 148
- US-A- 3 807 154
- US-A- 3 934 390
- US-A- 4 668 122
- US-A- 4 919 566
- US-A- 5 375 640
- US-A- 5 784 872
- US-B2- 6 652 186
- PATENT ABSTRACTS OF JAPAN Bd. 010, Nr. 253 (M-512), 29. August 1986 (1986-08-29) & JP 61 081206 A (YOKOHAMA RUBBER CO LTD:THE), 24. April 1986 (1986-04-24)
- Auszug aus der Internetseite:www.wikipedia.org "Müllverdichter"

## Beschreibung

Die Erfindung betrifft ein Fahrzeug mit zumindest einer Fahrwalze mit einem Walzenmantel, auf dessen Oberfläche sich Vorsprünge mit einer Spitze befinden, wobei die Vorsprünge pyramiden- oder kegelförmig als Stacheln ausgebildet sind.

### STAND DER TECHNIK

Insbesondere im landwirtschaftlichen Bereich gibt es eine Vielzahl von Fahrzeugen, die erheblichen Anforderungen ausgesetzt sind. Diese Fahrzeuge werden oft in schwierigem Gelände eingesetzt, beispielsweise werden mit ihnen extremste Steilhänge bearbeitet.

Zu erwähnen sind vor allem handgeführte Einachser, wie beispielsweise Motormäher, Kreiselheuer, Bandrechen aber auch ausserhalb des landwirtschaftlichen Bereichs, beispielsweise Kehrmaschinen und Schneeräumer.

Für derartige Fahrzeuge werden vor allem Räder mit einer Gummibereifung angeboten, wobei die Verwendung derartiger Mäher beispielsweise im steilen Gelände seine Grenzen hat. Hier werden anstelle der Gummiräder, beispielsweise Stahl-Gitterräder oder sogenannte Stachelwalzen eingesetzt, wobei beispielsweise anstelle der Gummiräder seitlich an die Achse eines Motormähers jeweils eine Stachelwalze montiert wird. Die Stacheln dieser Stachelwalzen graben sich in den Boden ein, wodurch extremste Steilhänge bearbeitet werden können. Durch die vielen Auflagepunkte bieten die Stachelwalzen sehr guten Halt und verhindern dadurch ein Aufreissen und Einschneiden der Grasnabe.

Die Stacheln bei den bekannten Stachelwalzen sind in der Regel aus sich kreuzenden Dreiecken hergestellt, die auf dem Walzenmantel aufgeschweisst werden. Hierdurch ergeben sich aber tiefe Ecken, in denen sich Erde oder auch biologisches Material festsetzen kann, so dass im Laufe des Gebrauchs die Eindringtiefe der Stacheln vermindert und damit der Gebrauch eingeschränkt wird. Ferner erzeugen die Stacheln beim Fahren, beispielsweise auf Beton oder Asphalt, einen erheblichen Lärm, der unerwünscht ist.

Fahrzeuge der unter den Oberbegriff fallenden Art werden beispielsweise in der DE 26 50 330 A1 beschrieben. Hierbei ist am vorderen Ende eines Tragrahmens einer Vorrichtung zur Pflanzerleichterung eine mit Ringen besetzte dreh- sowie lenkbar gelagerte Walze vorgesehen, welche mit einzelnen Segmenten bestückt ist.

Die US 1,538,148 A offenbart einen Rasenmäher, dessen Antriebsrad mit einem Ringelement umgeben wird, welches wiederum mit Dornenelementen versehen ist, um dem Rasenmäher insgesamt einen besseren Halt auf dem Rasen zu verleihen.

Ein weiterer Rasenmäher wird in der GB 2 334 875 A beschrieben, dessen Räder ebenfalls mit Dornen versehen sind, um die Belüftung des Rasens zu ermöglichen und gleichzeitig eine Beschädigung des Rasens durch das ständige Überqueren mit dem Rasenmäher zu vermeiden.

Die US 3,807,154 A sowie die US 5,784,872 A wiederum beschreiben Kehrmaschinen, welche jeweils mit einer Walze versehen sind, die auf ihrem Umfang mehrere Dornen aufweisen, um Abfall u. dgl. besser aufsammeln zu können.

Die DE 30 40 590 A1 wiederum beschreibt eine Vorrichtung zur Auflockerung verdichteter Sportplatzoberflächen, welche eine auf den zu behandelnden Oberflächen abrollbare Walze aufweist, deren Umfangsfläche mit einer Vielzahl von radial abstehenden Spitzdornen versehen ist.

Die US 5,375,640 A sowie die JP 61081206 A offenbaren Reifenprofile für Fahrzeuge zur Verbesserung der Laufleistung in jedem Gelände. Die Reifenprofile sind hierbei mit entsprechenden Vorsprüngen versehen.

Um beispielsweise derartige Vorsprünge auf einer Walze herstellen zu können, beschreibt die DE 38 43 890 C1 ein Verfahren, bei welchem das Blechteil schrittweise mit Hilfe von Verformungswerkzeugen von einer ursprünglich flachen Form partiell in die Form des gewünschten Durchzugs überführt wird, was durch Auflegen und flächiges Andrücken des Blechteils auf das mit einer Ausnehmung versehene Unterteil eines Verformungswerkzeuges sowie Eindrücken des Blechteils mittels des Oberteils des Verformungswerkzeuges in die Ausnehmung des Unterteils geschieht, wobei das flächige Andrücken erst erfolgt, nachdem mit dem Eindrücken bereits begonnen wurde.

Auch die DE 25 36 611 A1 beschreibt ein Verfahren, mit welchem Löcher mit Aushalsungen in Blechen angebracht werden können. Hierbei wird mit einem schnellrotierenden Dorn aus hitzebeständigem, hartem und weitgehend genährtem Werkstoff der Blechwerkstoff an der Lochstelle durch mechanische Reibung zunächst bis zum teigigen oder nahezu schmelzflüssigen Zustand erwärmt und der erweichte Werkstoff durch Eindrücken des Dornes zu einem Loch geformt, wobei auf der Gegenseite des Bleches an der Lochstelle ein dem weggedrückten Werkstoff von der Rückseite her eine bestimmtes formgebendes Formwerkzeug beim Lochen angeordnet wird.

### AUFGABE DER ERFINDUNG

Aufgabe der vorliegenden Erfindung ist es, ein Fahrzeug der o.g. Art zu schaffen, das eine verbesserte Fahrweise aufweist.

### LÖSUNG DER AUFGABE

Zur Lösung der Aufgabe führen die Merkmale des Patentanspruches 1.

Um die Spitze lösbar mit der Basis verbinden zu können, ist in einem einfachen Ausführungsbeispiel vorgesehen, dies durch einen Schraubenbolzen zu gewährleisten, der eine Scheibe durchsetzt, wobei die Scheibe einen grösseren Durchmesser als die Öffnung der Basis aufweist. Hierdurch kann, wenn die Scheibe von Innen her in die Basis eingeführt wird, diese nicht aus der Öffnung herausgleiten. Wird nun der Schraubenbolzen ebenfalls vom Inneren der Fahrwalze her durch eine Öffnung in der Scheibe und danach in eine Gewindebohrung in der Spitze eingesetzt, so kann durch Anziehen des Schraubenbolzens die Spitze zu der Öffnung der Basis hin gezogen und an dieser festgelegt werden. Dabei hilft ein an der Spitze vorgesehener Ringkragen der Zentrierung der Spitze gegenüber der Basis.

Entgegen dem Stand der Technik kann nun diese Spitze, da sie auswechselbar ist, beispielsweise aus einem Kunststoff hergestellt werden, der billig und relativ verschleissfest ist. Zum einen werden dadurch Geräusche beim Fahren der Fahrwalze minimiert, zum anderen braucht nicht die gesamte Fahrwalze ausgetauscht werden, wenn die Spitzen sehr lang im Gebrauch und dadurch relativ verschlissen sind.

Die pyramiden- oder kegelförmige Ausgestaltung der Vorsprünge hat den Vorteil, dass sich an dem Stachel keine tiefen Ecken bilden, in denen sich Humus, Erde oder biologisches Material festsetzen kann. Selbst wenn auf der Oberfläche des Vorsprungs Boden verbleibt, so wird dieser beim nächsten Eindringen des Vorsprungs in den Boden wieder von selbst beseitigt. Auf diese Art und Weise wird gewährleistet, dass der Vorsprung immer tief in die Erde eindringen kann und sich selbst reinigt.

Bevorzugt ist der Vorsprung mit einem äusseren Mantel oder Seitenflächen versehen, die konkav nach innen gewölbt von der Spitze zu einem Basisbereich verlaufen. Hierdurch wird der Körper des Vorsprunges schlanker gehalten, so dass der Vorsprung leichter und tiefer in die Erde eindringen kann. Dennoch hat er einen breiten Basisbereich am Walzenmantel, so dass er eine ausreichende Festigkeit besitzt und beim Betrieb nicht abscheren kann.

Nach der Erfindung soll ein Vorsprung zumindest teilweise einstückig aus dem Walzenmantel ausgezogen sein.

Da jedoch das Aushalsen aus einem gekrümmten Walzenmantel geschieht, hat es sich als ratsam erwiesen, vor dem Beginn des Aushalsens eine elliptische Ausnehmung in den Walzenmantel einzuformen und danach die Basis des Vorsprungs mit einem runden Dorn auszuhalsen. Diese gewährleistet, dass schlussendlich oben an der Basis eine kreisförmige Öffnung entsteht, für die Basis selbst aber genügend Material aus dem gekrümmten Walzenmantel zur Verfügung steht.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen Teil einer erfindungsgemässen Fahrwalze;
Figur 2 eine Draufsicht auf ein weiteres Ausführungsbeispiel einer erfindungsgemässen Fahrwalze in verschiedenen Stadien bei der Herstellung der Vorsprünge;
Figur 3 einen Teilquerschnitt durch die Fahrwalze gemäss Figur 2 entlang Linie III-III.

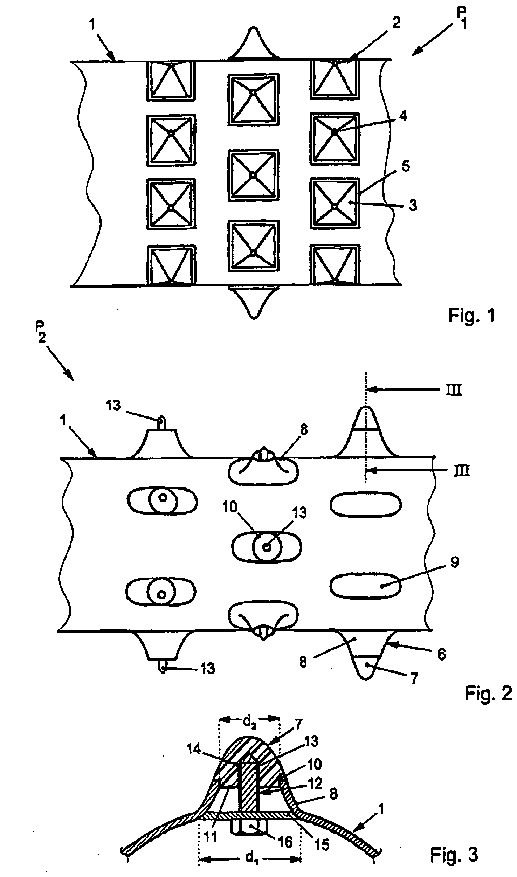

Eine Fahrwalze P₁ weist gemäss Figur 1 einen Walzenmantel 1 auf, auf dem sich Vorsprünge 2 befinden. Diese Vorsprünge 2 sind pyramidenartig ausgestaltet.

Bei den Vorsprüngen 2 ist es wichtig, dass die Pyramiden platte Seitenflächen 3 aufweisen, die auch ggf. konkav nach innen gewölbt sein können. Sie verlaufen von einer Spitze 4 bis zu einer Basis 5. Dabei spielt die Zahl der Seitenflächen 3 keinerlei Rolle. Die Pyramide kann drei-, vier- oder mehreckig sein. Durch die Ausgestaltung des Vorsprunges 2 als Pyramide wird gewährleistet, dass nach dem Abrollen der Fahrwalze P₁, beispielsweise auf einer landwirtschaftlichen Nutzfläche, sehr wenig biologisches Material oder Erde an dem Vorsprung 2 haften bleibt. Durch die glatten Oberflächen mit keinen versteckten Ecken ist auch die Reinigung der Vorsprünge bzw. des ganzen Walzenmantels 1, beispielsweise mit einem Hochdruckreiniger, sehr einfach möglich.

Bei dem weiteren Ausführungsbeispiel einer Fahrwalze P₂ gemäss Figur 2 stehen von dem Walzenmantel 1 kegelartige Vorsprünge 6 ab. Jeder kegelartige Vorsprung 6 besteht aus einer Spitze 7 und einer Basis 8. Dabei ist die Spitze 7 lösbar mit der Basis 8 verbunden. Ferner besteht die Spitze 7 bevorzugt aus einem anderen Material als die Basis 8, beispielsweise aus Kunststoff.

Die Fahrwalze P₂ wird wie folgt hergestellt:

In einer ersten Stufe wird in den Walzenmantel 1 eine elliptische Ausnehmung 9 eingeformt. Danach wird mit einem runden Dorn die Basis 8 ausgehalst, so dass sich eine runde obere Öffnung 10 ergibt.

Wie insbesondere in Figur 3 gezeigt, wird nun auf diese Öffnung 10 die Spitze 7 aufgesetzt, wobei der Spitze 7 ein Ringkragen 11 angeformt ist, der in die Öffnung 10 eingreift. Hierdurch kann die Spitze 7 gegenüber der Basis 8 nicht verrutschen.

Die Festlegung der Spitze 7 erfolgt mittels eines Schraubenbolzens 12, wobei ein Gewindeschaft 13 des Schraubenbolzens 12 in eine entsprechende Gewindebohrung 14 in der Spitze 7 eingreift. Der Gewindeschaft 13 durchsetzt eine Unterlegscheibe 15, wobei diese einen grösseren Durchmesser d₁ aufweist, als ein Durchmesser d₂ der Öffnung 10. Hierdurch wird gewährleistet, dass sich beim Einschrauben des Schraubenbolzens 12 in die Gewindebohrung 14 die Unterlegscheibe 15 unter dem Druck eines Schraubenkopfes 16 in der Basis 8 verkeilt.

### Bezugszeichenliste

| | | | | | |
|---|---|---|---|---|---|
| 1 | Walzenmantel | 34 | | 67 | |
| 2 | Vorsprung | 35 | | 68 | |
| 3 | Seitenfläche | 36 | | 69 | |
| 4 | Spitze | 37 | | 70 | |
| 5 | Basis | 38 | | 71 | |
| 6 | Vorsprung | 39 | | 72 | |
| 7 | Spitze | 40 | | 73 | |
| 8 | Basis | 41 | | 74 | |
| 9 | Ausnehmung | 42 | | 75 | |
| 10 | Öffnung | 43 | | 76 | |
| 11 | Ringkragen | 44 | | 77 | |
| 12 | Schraubenbolzen | 45 | | 78 | |
| 13 | Gewindeschaft | 46 | | 79 | |
| 14 | Gewindebohrung | 47 | | | |
| 15 | Unterlegscheibe | 48 | | | |
| 16 | Schraubenzapfen | 49 | | | |
| 17 | | 50 | | d₁ | Ø von 15 |
| 18 | | 51 | | d₂ | Ø von 10 |
| 19 | | 52 | | | |
| 20 | | 53 | | | |
| 21 | | 54 | | | |
| 22 | | 55 | | | |
| 23 | | 56 | | P | Fahrwalze |
| 24 | | 57 | | | |

## Patentansprüche

1. Fahrzeug mit zumindest einer Fahrwalze (P1, P2) mit einem Walzenmantel (1), auf dessen Oberfläche sich Vorsprünge (2, 6) mit einer Spitze (4, 7) befinden, wobei die Vorsprünge (4, 7) pyramiden- oder kegelförmig als Stacheln ausgebildet sind
**dadurch gekennzeichnet,**
**dass** die Spitze (7) auf eine Basis (8) des Vorsprunges (6) aufgesetzt und lösbar mit der Basis (8) verbunden ist, wobei die Vorsprünge (6) zumindest teilweise einstückig aus dem Walzenmantel (1) ausgezogen sind.

2. Fahrzeug nach Anspruch 1, **dadurch gekennzeichnet, dass** ein äusserer Mantel oder Seitenflächen (3) des Vorsprunges (2, 6) konkav nach innen gewölbt von der Spitze (4, 7) zu einem Basisbereich (5, 8) verläuft/en.

3. Fahrzeug nach einem der Ansprüche 1 bis 2, **dadurch gekennzeichnet, dass** die Spitze (7) eine Gewindebohrung (14) zur Aufnahme eines Schraubenbolzens (12) aufweist.

4. Fahrzeug nach Anspruch 3, **dadurch gekennzeichnet, dass** der Schraubenbolzen (12) eine Scheibe (15) od. dgl. durchsetzt, welche in die Basis (8) eingesetzt ist.

5. Fahrzeug nach Anspruch 4, **dadurch gekennzeichnet, dass** die Scheibe (15) einen grösseren Durchmesser (d1) besitzt als eine obere Öffnung (10) der Basis (8), welche von der Spitze (7) überdeckt ist.

6. Fahrzeug nach Anspruch 5, **dadurch gekennzeichnet, dass** die Spitze (7) mit einem abgestützten Ringkragen (11) in die Öffnung (10) der Basis (8) eingesetzt ist.

7. Fahrzeug nach wenigstens einem der Ansprüche 1 bis 6, **dadurch gekennzeichnet, dass** die Spitze (7) aus einem relativ verschleissfesten Kunststoff besteht.

## Claims

1. A vehicle having at least one travelling roller (P₁, P₂) with a roller shell (1) on whose surface there are located projections (2, 6) with an apex (4, 7), wherein the projections (4, 7) are pyramid-shaped or cone-shaped in the form of spikes, **characterised in that** the apex (7) is placed on a base (8) of the projection (6) and is detachably connected to the base (8), whereas the projections (6) are at least in part integrally drawn out from the roller shell (1).

2. A vehicle according to claim 1, **characterised in that** an outer shell or lateral surfaces (3) of the projection (2, 6) run(s) from the apex (4, 7) to a base region (5, 8) in a manner so as to be curved concavely inwards.

3. A vehicle according to any one of claims 1 to 2, **characterised in that** the apex (7) has a tapped bore (14) to receive a screw bolt (12).

4. A vehicle according to claim 3, **characterised in that** the screw bolt (12) passes through a disc (15) or the like inserted into the base (8).

5. A vehicle according to claim 5, **characterised in that** the disc (15) has a larger diameter (d₁) than an upper opening (10), covered by the apex (7), of the base (8).

6. A vehicle according to claim 6, **characterised in that** the apex (7) is inserted into the opening (10) of the base (8) by means of a supported annular collar (11).

7. A vehicle according to at least one of claims 1 to 7, **characterised in that** the apex (7) consists of a relatively wear-resistant plastics material.

## Revendications

1. Véhicule avec au moins un cylindre de conduite (P₁, P₂) avec une enveloppe de cylindre (1) sur la surface de laquelle se trouvent des saillies (2, 6) avec une pointe (4, 7), les saillies (4, 7) étant réalisées de forme pyramidale ou conique sous forme d'épines,
**caractérisé par le fait**
**que** la pointe (7) est placée sur une base (8) de la saillie (6) et assemblée de manière amovible avec la base (8) pendant que les saillies (6) sont du moins en partie extraites d'une seule pièce de l'enveloppe de cylindre (1).

2. Véhicule selon la revendication 1, **caractérisé par le fait qu'**une enveloppe extérieure ou les faces latérales (3) de la saillie (2, 6) s'étend(ent) de manière bombe concave vers l'intérieur de la pointe (4, 7) vers une zone de la base (5, 8).

3. Véhicule selon Pune des revendications 1 à 2, **caractérisé par le fait que** la pointe (7) présente un alésage taraudé (14) destiné à recevoir un boulon fileté (12).

4. Véhicule selon la revendication 3, **caractérisé par le fait que** le boulon fileté (12) traverse une plaquette (15) ou autre qui est placée dans la base (8).

5. Véhicule selon la revendication 4, **caractérisé par le fait que** la plaquette (15) possède un diamètre plus grand (d1) qu'une ouverture supérieure (10) de la base (8) qui est recouverte par la pointe (7).

6. Véhicule selon la revendication 5, **caractérisé par le fait que** la pointe (7) est placée avec une collerette annulaire supportée (11) dans l'ouverture (10) de la base (8).

7. Véhicule selon au moins l'une des revendications 1 à 6, **caractérisé par le fait que** la pointe (7) est réalisée en une matière plastique relativement résistante à l'usure.
